# EUROPEAN PATENT SPECIFICATION

(11) **EP 2 703 624 B1**
(45) Date of publication and mention of the grant of the patent: **09.11.2016**
(21) Application number: 12777288.7
(22) Date of filing: 28.04.2012
(51) Int. Cl.: F02C 7/042, B64D 33/02, F02C 7/057

(54) **ADJUSTABLE SUPERSONIC AIR INLET**
EINSTELLBARER ÜBERSCHALL-LUFTEINLASS
PRISE D'AIR SUPERSONIQUE RÉGLABLE

(30) Priority: 29.04.2011 RU 2011116974
(43) Date of publication of application: 05.03.2014
(73) Proprietor: Otkrytoe Akcionernoe Obschestvo Aviacionnaya Holdingovaya Kompaniya Suhoi, Moscow 125284 (RU)
(72) Inventor: DAVIDENKO, Aleksandr Nikolaevich, Moscow 123592 (RU); STRELETS, Mihail Yurievich, Moskovskaya obl. 143952 (RU); RUNISHEV, Vladimir Aleksandrovich, Moscow 117393 (RU); BIBIKOV, Sergey Yurievich, Moscow 125445 (RU); POLYAKOVA, Natalya Borisovna, Moscow 129272 (RU); SUTSKEVER, Anatoly Isaakovich, Moscow 117574 (RU); KOSITSIN, Aleksandr Anatolevich, Moskovskaya obl. 143080 (RU); GAVRIKOV, Andrey Yurievich, Moscow 109544 (RU); STEPANOV, Vladimir Alekseevich, Moscow 127276 (RU)
(74) Representative: Studio Torta S.p.A.
(86) International application number: PCT/RU2012/000341
(87) International publication number: WO 2012/148318

(56) References cited:
- EP-A2- 0 799 982
- RU-C1- 2 200 240
- RU-C1- 2 343 297
- US-A- 3 879 941
- US-A- 3 941 336
- US-A- 4 372 505
- REMEEV N.KH.: 'Aerodinamika vozdukhozabornikov sverkhzvukhovykh samoletov.' IZD. TSAGI IM. PROF. N.E. ZHUKOVSKOGO, G. ZHUKOVSKY 2002, pages 11, 15, 51 - 52, 73, XP008172133

## Description

The invention relates to aeronautical engineering and, more particularly, to air intakes for supersonic aircraft propulsion systems. The invention is preferably applicable in bypass turbojet engine aircrafts with a maximum Mach number of 3.0.

Creation of an aircraft (AC) with low radar perceptibility implies that the shape of all its elements contributes to reducing the radar cross section (RCS) of the aircraft. This also applies to the shape of entrance to the air intake of the engine. To achieve the desired result all edges of the air intake should have a sweep and be parallel to some aircraft elements (edges of wing, empennage, etc.). It is not a trivial task to create such a supersonic air intake having high inherent characteristics for a Mach number of M>2.0.

A supersonic adjustable two-dimensional air intake is known wherein the flow is decelerated on an adjustable multi-stage straight wedge in a series of oblique shock waves. In order to improve the air intake performance the wedge can be provided with perforation and the throat region - with a transverse slot for bleeding the boundary layer (Remeev N.H. Aerodynamics of Supersonic Aircraft Air Intakes. Publ. TsAGI, Zhukovsky, 2002, 178 pages).

A supersonic air intake of F-22 aircraft implementing a scheme of three-dimensional compression of supersonic flow (Aerodynamics, Stability and Maneuverability of Supersonic Aircraft, ed. G.S.Byushgens. M.: Nauka. Fizmatlit, 1998) may be referred to as a prior art. To reduce radar perceptibility of the F-22 aircraft the air intake is swept on all edges of the entrance. As seen from the front, the air intake entrance has the shape of a parallelogram. The air intake has one decelerating stage per each perforated vertical and horizontal wedge, and air bypass doors in the duct. The air intake duct is S-shaped. The minimum flow passage area (throat) is nonadjustable. The lack of adjusting the air intake throat in the F-22 aircraft is a disadvantage. For this reason, the air intake performance at supersonic flight regimes is below the level typical for adjustable air intakes (System Analysis of Technical Aspect of "Raptor" F/A-22 aircraft, Report of FGUP "GosNIIAS" No.68 (15396), 2005). Apparently, the air intake is not designed to fly with a Mach number over M=2.0 (Aerodynamics, Stability and Manoeuvrability of Supersonic Aircraft, ed. G.S.Byushgens. M.: Nauka. Fizmatlit, 1998).

Another prior art is an air intake comprising an entrance to the air intake in the form of a flow deceleration system - a supersonic diffuser consisting of two multi-stage swept decelerating wedges which form a dihedral angle, a shell, which also forms a dihedral angle, all of the edges of the entrance lying in the same plane, an air intake throat situated downstream of the deceleration system, and a subsonic diffuser downstream thereof (RU 2343297 C1). The prior art implements three-dimensional deceleration of the flow by using a V-shaped wedge (i.e. two adjacent swept wedges oriented to each other, as seen from the front, at an obtuse angle), and control of the throat area with two pairs of adjustable panels. The air intake is configured to make all entrance edges swept. When each pair of panels is adjusted transverse slots appear between their adjacent end faces, and longitudinal slots appear between their side faces both on the joints with side walls and on the joints with each other. The slots serve the purpose of reducing the adverse effect of the boundary layer on the air intake characteristics, including the boundary layer that grows along the dihedral angle. This technical solution has the following disadvantages:
- adjustment of the air intake does not provide the necessary throat area at subsonic and low supersonic flight speeds inasmuch as the movable panels move with small amplitude. Otherwise there appear aforementioned slots of unacceptable size. This means that the air intake fails to provide the bypass turbojet engine operation throughout the operating range of speeds and is not a multi-mode one.
- realization of the air intake adjustment is technically complicated.

Document US 4,372,505 discloses the features of the preamble of claim 1 and shows a supersonic inlet of a supersonic aircraft having variable area sideplate openings. However, the above mentioned issues have not been solved.

The technical effect to be achieved by the invention consists in ensuring, by adjusting the apex angle of stages of one of the swept wedges and the minimum flow passage area of the air intake, a stable operation of the engine in all flight regimes up to a Mach number of M=3.0 with the engine intake total pressure recovery factor with a level not lower than a typical one for adjustable two-dimensional air intakes and overall flow heterogeneity below the maximum permissible value (Aerodynamics, Stability and Maneuverability of Supersonic Aircraft, ed. G.S.Byushgens. M.: Nauka. Fizmatlit, 1998). The radar perceptibility of the object on which the air intake is mounted is reduced due to the parallelogram shape of the air intake entrance as seen from the front and the sweep of all edges. The greatest radar perceptibility reduction effect will be achieved when edges of the air intake are parallel to some elements of the object (leading or trailing edges of the wing, empennage, etc.).

Said technical effect is achieved in an adjustable supersonic air intake comprising an entrance in the form of a flow deceleration system - a supersonic diffuser consisting of two multi-stage swept decelerating wedges which form a dihedral angle; a shell, which also forms a dihedral angle, all edges of the entrance lying in the same plane; an air intake throat situated downstream of the deceleration system, and a subsonic diffuser downstream thereof; wherein the entrance of the air intake, as seen from the front, has the shape of a rectangle or a parallelogram with an arbitrary ratio of its height to the length of respective side; the number of stages on the swept wedges may be different and the sweep of the wedges may be different from each other and from respective edges of the entrance; all stages, except for the first one, of one of the two multi-stage swept wedges are rotatable about an axis situated at the intersection of the first and second stages of said wedge to form a movable front panel; a mating movable rear panel is situated in the subsonic diffuser, said movable rear panel being part of the subsonic diffuser and rotatable about an axis situated in the region of the rear end face of this panel; wherein at synchronous rotation of the front and rear panels a transverse slot having the shape close to rectangular is formed between the them.

Downstream of oblique shock waves from the decelerating wedges an air bypass into the external flow can be provided in the region of the dihedral angle formed by the shell.

An additional transverse slot closed by a pivot door can be provided on the fixed wedge in the throat region.

As seen from the front, angles of the air intake entrance, except for the angle formed by the swept wedges, can be rounded or cut off.

The subsonic diffuser can have holes closed by suction relief doors.

A notch may be provided in the edge of the air intake entrance in the region of the dihedral angle formed by the shell.

The shell may have arbitrarily-shaped holes.

Perforation can be provided on the decelerating wedges.

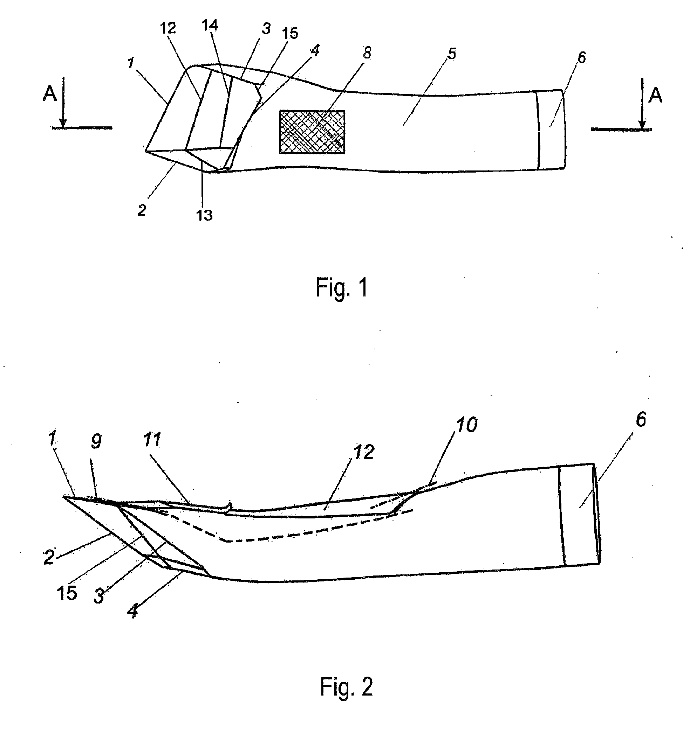

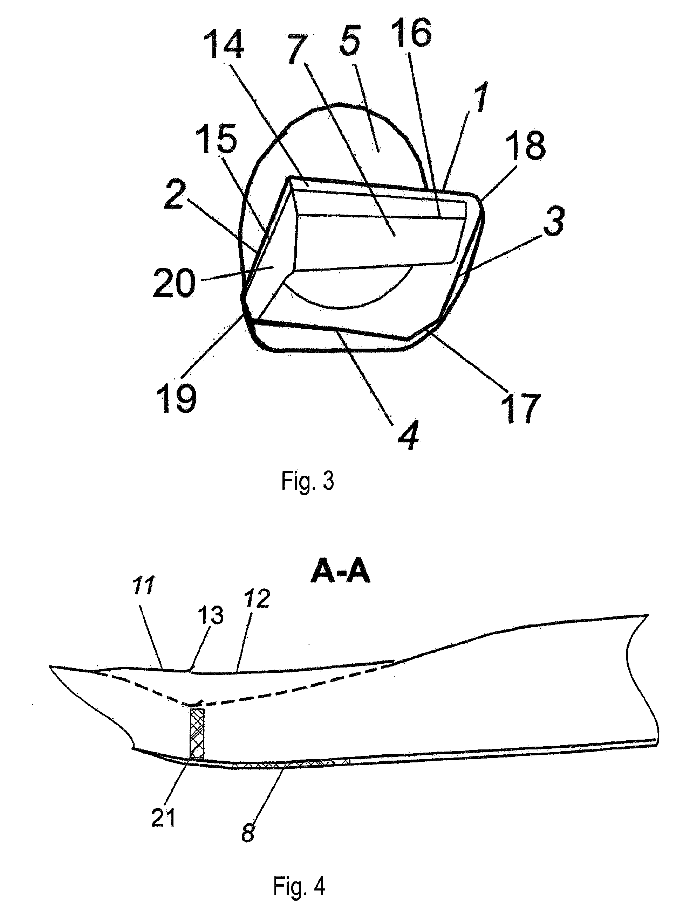

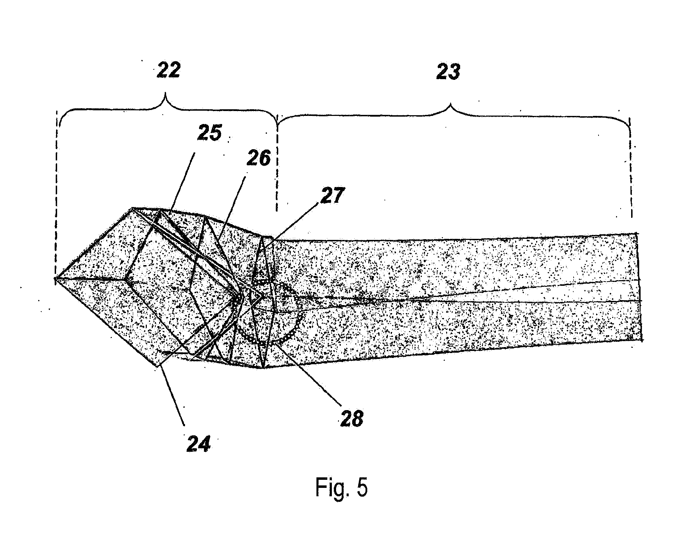

The invention is illustrated by the drawings, where Figure 1 shows a bottom view of an adjustable supersonic air intake; Figure 2 is a side view of an adjustable supersonic air intake; Figure 3 is a front view of an adjustable supersonic air intake; Figure 4 shows section A-A in Figure 1; Figure 5 shows a schematic view of flow deceleration in an adjustable supersonic air intake in a rated power flight.

An adjustable supersonic air intake comprises the following elements:
1 - edge of a decelerating wedge comprising a front adjustable panel;
2 - edge of a fixed decelerating wedge;
3, 4 - edges of a shell;
5 - duct of the air intake;
6 - cylindrical portion;
7 - decelerating wedge comprising a front adjustable panel;
8 - suction relief doors;
9 - pivot axis of front adjustable panel 11;
10 - pivot axis of rear adjustable panel 12;
11 - front adjustable panel in maximum throat position (dotted line shows minimum throat position);
12 - rear adjustable panel in maximum throat position (dotted line shows minimum throat position);
13 - transverse slot between the front and rear adjustable panels for bleeding the boundary layer;
14 - bend between the first and second stages of the decelerating wedge 7 comprising a front adjustable panel;
15 - line of bend between the first and second stages of the fixed decelerating wedge;
16 - line of bend between the second and third stages of decelerating wedge 7 comprising a front adjustable panel;
17 - cutoff of the dihedral angle formed by the shell;
18 - rounding of the entrance in the joint between decelerating wedge 7 comprising a front adjustable panel and the shell;
19 - cutoff of the dihedral angle formed by fixed decelerating wedge 20 and the shell;
20 - fixed decelerating wedge 20;
21 - door adjusting an additional transverse slot in the throat region on fixed decelerating wedge 20;
22 - supersonic diffuser (deceleration system);
23 - subsonic diffuser;
24 - oblique shock wave from first stages of swept wedges 7 and 20;
25 - oblique shock wave from second stages of swept wedges 7 and 20;
26 - oblique shock wave from third stages of swept wedges 7 and 20;
27 - final normal shock wave;
28 - bypass area downstream of oblique and normal shock waves for increasing the range of air flow rate through the air intake at which its stable operation is provided.

An air intake entrance, as seen from the front, has the shape of a parallelogram or its particular case - a rectangle with an arbitrary ratio of its height to the length of respective side. The entrance may have cutoffs 17 and 19 or rounding 18 of angles, except for the angle, formed by the swept wedges of 7 and 20. Edges of the air intake entrance lie in a plane oriented at an acute angle to the flow direction. Thus, all edges of the entrance are swept.

A supersonic diffuser 22 comprises a flow deceleration system consisting of a pair of swept wedges 7 and 20 which form a dihedral angle, and a shell (3, 4 - edges of the shell). Swept wedges 7 and 20 have at least one stage, and the number of stages on the wedges may be different. As an example, Figs. 1, 2, 3, and 4 show an air intake having three stages on one swept wedge and two stages on the second. Bends of respective stages of swept wedges 14, 15 and 16 intersect each other at the point lying on the line of intersection of surfaces of respective stages of wedges 7 and 20 which form a dihedral angle. Sweep angles of stages on each of the swept wedges 7 and 20 may be different from the sweep angle of the edge of respective wedge, and also between themselves. Apex angles of the stages of the swept wedges 7 and 20 are specified in designing the deceleration system such that to create a single oblique shock wave of given intensity from each pair of respective wedge stages, i.e. using the principles of gas-dynamic designing (Shchepanovsky V.A., Gutov B.I. Gas-dynamic Designing of Supersonic Air Intakes. Nauka, Novosibirsk, 1993). Like the swept wedges 7 and 20, the shell forms a dihedral angle. A specific feature is that the shell is oriented such that it further decelerates the flow, i.e. the shell is not aligned on the current lines downstream of shock waves from the swept wedges 7 and 20. Undercut angle of the shell may be variable. A notch may be provided in the edge of the air intake entrance in the region of the dihedral angle formed by the shell, and the shell per se may have arbitrarily shaped holes.

A front adjustable panel 11 comprises stages of one of the swept wedges, with the exception of the first stage, and rotates about an axis 9 located at the intersection of the first and second stages of the wedge 7. A rear adjustable panel 12 is part of the subsonic diffuser 23 and rotates about a spatially located axis 10. The axis extends above the rear end face of the panel.

In the process of adjusting the air intake the front and rear adjustable panel 11, 12, while rotating, change their position simultaneously in accordance with a predetermined law, thereby varying the area of the air intake throat, the apex angle of movable stages of the swept wedge 7, and formation of a transverse slot 13 for bleeding the boundary layer between the front and rear adjustable panels is also possible. The rotation axis 10 of the rear adjustable panel 12 is oriented such that when the panels are adjusted the transverse slot 13 has a shape close to rectangular one. An additional transverse slot closed by a door 21 may be provided on the fixed swept wedge 20 in the throat region for bleeding the boundary layer. To prevent entry of the boundary layer into the engine some stages of the swept wedges 7 and 20 may have perforations for suction of the boundary layer accumulated on these stages.

The above slots and perforations contribute to improvement of characteristics of the air intake at supersonic speeds owing to the prevention of entry of strongly turbulized boundary layer into the engine.

The subsonic diffuser 23 may have suction relief doors 8 providing access of external air stream flowing around the air intake into the subsonic diffuser. The suction relief doors 8 contribute to enhancement of the air intake performance at low speeds (takeoff and flight at high angles of attack).

The present adjustable supersonic air intake operates as follows.

At subsonic flight speeds the adjustable panels of the air intake are in retracted position 11 and 12, thereby providing the throat area at which there is no supersonic flow speed in duct 5.

At supersonic flight speeds the aircraft propulsion system efficiency is related to the efficiency of flow deceleration in the air intake.

Deceleration of supersonic flow in the present embodiment of air intake takes place in shock waves 24, 25, 26 appearing when the flow flows around the swept wedges 7 and 20 of the deceleration system.

As the flight speed increases to supersonic, adjustable panels (front 11 and rear 12) synchronously deflect from the position corresponding to subsonic flight. The front panel 11 being deflected, the apex angles of stages of the wedge 7 are increase, thereby increasing the flow deceleration intensity in shock waves from these stages. The rear panel 12 being deflected, the throat area reduces. The increased intensity of flow deceleration and reduced throat area have a positive effect on characteristics of the air intake.

When a rated (normally highest) flight speed is achieved a design flow pattern (Figure 5) is accomplished in the supersonic diffuser 22, where three-dimensional shock waves 24, 25, 26 arise from each pair of respective wedges of stages 7 and 20 forming a dihedral angle. The deceleration system, i.e. supersonic diffuser 22, corresponding to a rated configuration is designed using the gas-dynamic designing principles (Shchepanovsky V.A., Gutov B.I. Gas-dynamic Designing of Supersonic Air Intakes. Nauka, Novosibirsk, 1993).

At a flight speed below the rated speed the flow pattern in the air intake deceleration system is different from the design one.

Deceleration of the flow up to subsonic speed is effected in final normal shock wave 27, which should be located at the air intake entrance downstream of oblique shock waves. The subsonic flow is ultimately decelerated in the subsonic diffuser 23 and consumed by the engine.

Stable operation of the air intake in all flight regimes and under all engine power conditions is ensured by an air bypass availability in oblique shock waves 28, the boundary layer bleed system in the form of perforations on stages of the wedges 7 and 20 of the deceleration system and the transverse slot 13 between the front 11 and rear 12 adjustable panels. The boundary layer bleed can be further realized through an additional transverse slot adjustable by a door 21 and located in the throat area downstream of the fixed decelerating wedge 20 containing nonadjustable stages.

The boundary layer bleed system also contributes to enhancement of the air intake performance.

The range of stable operation of the air intake with varying the air flow rate therethrough can be further increased by providing a notch in the edge of the air intake entrance in the region of the dihedral angle formed by the shell, and/or arbitrarily shaped holes in the shell.

Experimental and theoretical studies of the air intake performance in various modes of operation and ram airflow velocities demonstrated the effectiveness of the present design solutions and the observance of requirements to air intakes.

While providing high inherent gas-dynamic characteristics, the air intake configuration simultaneously contributes to reduction in the radar perceptibility of the object on which the air intake is mounted. This effect is achieved by the parallelogram shape of the air intake entrance, as seen from the front, and the sweep of all edges of the entrance. The elements are oriented such that the number of directions in which the radar signal is reflected from the object is minimal.

## Claims

1. An adjustable supersonic air intake comprising an entrance to the air intake in the form of a flow deceleration system - a supersonic diffuser consisting of two multi-stage swept decelerating wedges (7, 20) which form a dihedral angle; a shell, which also forms a dihedral angle, all edges of the entrance lying in the same plane; an air intake throat situated downstream of the deceleration system, and a subsonic diffuser (23) downstream thereof, wherein the entrance of the air intake, as seen from the front, has the shape of a rectangle or a parallelogram with an arbitrary ratio of its height to the length of respective side; all stages, except for the first one, of one of the two multi-stage swept wedges (7, 20) are rotatable about an axis (9) situated at the intersection of the first and second stages of said wedge to form a movable front panel (11); a mating movable rear panel (12) is situated in the subsonic diffuser, said movable rear panel being part of the subsonic diffuser and rotatable about an axis (10) situated in the region of the rear end face of this panel; wherein at synchronous rotation of the front and rear panels a transverse slot (13) having the shape close to rectangular is formed between them, **characterized in that** an additional transverse slot, adjustable by a pivot door (21), is provided on the fixed swept wedge in the throat region.

2. The air intake according to claim 1, **characterized in that** downstream of oblique shock waves from the decelerating wedges an air bypass (28) into the external flow is provided in the region of the dihedral angle formed by the shell.

3. The air intake according to claim 1, **characterized in that** as seen from the front, angles of the air intake entrance, except for the angle formed by the swept wedges, are rounded or cut off.

4. The air intake according to claim 1, **characterized in that** the subsonic diffuser (23) has holes closed by suction relief doors.

5. The air intake according to claim 1, **characterized in that** in the edge of the air intake entrance in the region of the dihedral angle formed by the shell there is provided a notch.

6. The air intake according to claim 1, **characterized in that** the shell has arbitrarily-shaped holes.

7. The air intake according to claim 1, wherein perforation is provided on the decelerating wedges (7).

8. The air intake according to claim 1, wherein the number of stages on the swept wedges is different and the sweep of the wedges is different from each other and from respective edges of the entrance.

## Patentansprüche

1. Einstellbarer Überschall-Lufteinlass, der aufweist:
einen Eingang in den Lufteinlass in Form eines Strömungsverzögerungssystems - eines Überschall-Diffusors, der aus zwei mehrstufigen gekrümmten Verzögerungskeilen (7, 20) besteht, die einen Raumwinkel bilden;
eine Schale, die ebenfalls einen Raumwinkel bildet, wobei alle Kanten des Eingangs in der gleichen Ebene liegen;
einen stromabwärts des Verzögerungssystems angeordneten Lufteinlasshals und einen Unterschall-Diffusor (23) stromabwärts davon, wobei von vorn betrachtet der Eingang des Lufteinlasses die Form eines Rechtecks oder eines Parallelogramms mit einem beliebigen Verhältnis von Seitenhöhe zu Seitenlänge hat;
wobei mit Ausnahme der ersten alle Stufen eines der zwei mehrstufigen gekrümmten Keile (7, 20) um eine Achse (9) drehbar sind, die an dem Schnittpunkt der ersten und zweiten Stufe des Keils angeordnet ist, um ein bewegliches vorderes Paneel (11) zu bilden;
wobei ein entsprechendes hinteres bewegliches Paneel (12) in dem Unterschall-Diffusor angeordnet ist, wobei das bewegliche hintere Paneel Teil des Unterschall-Diffusors ist und um eine Achse (10) drehbar ist, die in dem Bereich der hinteren Endfläche dieses Paneels angeordnet ist;
wobei bei einer gleichzeitigen Drehung des vorderen und hinteren Paneels ein transversaler ungefähr rechteckförmiger Schlitz (13) zwischen ihnen gebildet wird,
**dadurch gekennzeichnet, dass** ein zusätzlicher transversaler Schlitz, der mittels einer schwenkbaren Tür (21) einstellbar ist, an dem stationären gekrümmten Keil in dem Halsbereich bereitgestellt ist.

2. Lufteinlass nach Anspruch 1, **dadurch gekennzeichnet, dass** in dem Bereich des von der Schale gebildeten Raumwinkels stromabwärts von schrägen Schockwellen aus den Verzögerungskeilen ein Luft-Bypass (28) in die Außenströmung bereitgestellt ist.

3. Lufteinlass nach Anspruch 1, **dadurch gekennzeichnet, dass** von vorn betrachtet Winkel des Lufteinlasseingangs abgerundet oder abgeschnitten sind, mit Ausnahme des von den gekrümmten Keilen gebildeten Winkels.

4. Lufteinlass nach Anspruch 1, **dadurch gekennzeichnet, dass** der Unterschall-Diffusor (23) Löcher aufweist, die mittels Saugentlastungstüren geschlossen sind.

5. Lufteinlass nach Anspruch 1, **dadurch gekennzeichnet, dass** in der Kante des Lufteinlasseingangs in dem Bereich des von der Schale gebildeten Raumwinkels eine Kerbe bereitgestellt ist.

6. Lufteinlass nach Anspruch 1, **dadurch gekennzeichnet, dass** die Schale beliebig gestaltete Löcher hat.

7. Lufteinlass nach Anspruch 1, wobei an den Verzögerungskeilen (7) eine Perforation bereitgestellt ist.

8. Lufteinlass nach Anspruch 1, wobei die Anzahl von Stufen an den gekrümmten Keilen unterschiedlich ist und die Keile untereinander und im Vergleich zu den jeweiligen Kanten des Eingangs unterschiedliche Krümmung haben.

## Revendications

1. Une prise d'air supersonique comprenant une entrée à la prise d'air en forme de système ralentisseur de flux - un diffuseur supersonique composé de coins ralentisseurs à deux multi-niveaux (7, 20) qui forment un angle dièdre ; une enveloppe, qui forme aussi un angle en dièdre, tous les bords de l'entrée se positionnant dans le même plan; une gorge d'admission d'air située en aval du système de décélération, et un diffuseur subsonique (23) en aval de celui-ci, dans lequel l'entrée de la prise d'air, comme vu de l'avant, a la forme d'un rectangle ou d'un parallélogramme avec un ratio arbitraire de sa hauteur à la longueur du bord respectif; tous les niveaux, sauf pour le premier, d'un des deux coins ralentisseurs à multi-niveaux (7, 20) sont pivotant autour d'un axe (9) situé à l'intersection du premier et du second niveau dudit coin pour former un panneau avant mobile (11); un panneau arrière mobile correspondant (12) est situé dans le diffuseur subsonique, ledit panneau arrière mobile faisant partie du diffuseur subsonique et pivotant autour d'un axe (10) situé dans la zone de la face d'extrémité arrière de ce panneau; dans lequel en rotation synchrone des panneaux avant et arrière une fente transversale (13) ayant la forme proche d'une forme rectangulaire est formée entre eux, **caractérisée en ce qu'**une fente transversale additionnelle, ajustable par une porte pivotante (21) est prévue sur les coins ralentisseurs dans la zone en gorge.

2. La prise d'air selon la revendication 1, **caractérisée en ce qu'**en aval des ondes de chocs obliques à partir des coins ralentisseurs un contournement d'air (28) dans le flux externe est prévu dans la zone de l'angle en dièdre formé par l'enveloppe.

3. La prise d'air selon la revendication 1, **caractérisée en ce que** comme vu de l'avant, les angles de l'entrée de la prise d'air, sauf pour l'angle formé par les coins ralentisseurs, sont arrondis ou coupés.

4. La prise d'air selon la revendication 1, **caractérisée en ce que** le diffuseur subsonique (23) a une fente fermée par des portes de dépression.

5. La prise d'air selon la revendication 1, **caractérisée en ce qu'**au bord de l'entrée de la prise d'air dans la zone de l'angle en dièdre formée par l'enveloppe, il est prévue une encoche.

6. La prise d'air selon la revendication 1, **caractérisée en ce que** l'enveloppe a des fentes arbitrairement formées.

7. La prise d'air selon la revendication 1, dans laquelle une perforation est prévue sur les coins ralentisseurs (7).

8. La prise d'air selon la revendication 1, dans laquelle le nombre de niveaux sur les coins ralentisseurs est différent et le ralentissement des coins est différent de chacun des autres et des coins respectifs de l'entrée.
